# EUROPÄISCHE PATENTSCHRIFT

(11) **EP 2 621 767 B1**
(45) Veröffentlichungstag und Bekanntmachung des Hinweises auf die Patenterteilung: **24.12.2014**
(21) Anmeldenummer: 11757184.4
(22) Anmeldetag: 10.09.2011
(51) Int. Cl.: B60R 22/38

(54) **SELBSTSPERRENDER GURTAUFROLLER**
SELF-LOCKING BELT RETRACTOR
ENROULEUR DE CEINTURE À BLOCAGE AUTOMATIQUE

(30) Priorität: 30.09.2010 DE 102010046980
(43) Veröffentlichungstag der Anmeldung: 07.08.2013
(73) Patentinhaber: Autoliv Development AB, 447 83 Vårgårda (SE)
(72) Erfinder: BOSSE, Uwe, 20255 Hamburg (DE); HEINE, Volkmar, 22589 Hamburg (DE); BUTENOP, Klaus Werner, 25379 Herzhorn (DE)
(74) Vertreter: Müller Verweyen
(86) Internationale Anmeldenummer: PCT/EP2011/004564
(87) Internationale Veröffentlichungsnummer: WO 2012/041443

(56) Entgegenhaltungen:
- DE-A1- 2 450 139
- DE-A1- 3 403 568
- DE-A1- 10 324 195

## Beschreibung

Die Erfindung betrifft einen selbstsperrenden Gurtaufroller mit den Merkmalen des Oberbegriffs von Anspruch 1. DE10324195 A1 offenbart einen selbstsperrenden Gurtaufroller gemäss dem Oberbegriff des Anspruchs 1.

Selbstsperrende Gurtaufroller werden in Sicherheitsgurteinrichtungen von Fahrzeugen im Allgemeinen dazu verwendet, um einen nicht angelegten Sicherheitsgurt in eine Parkposition aufzuwickeln und einen variablen Auszug des Sicherheitsgurtes bei möglichst wenig Gurtlose zu ermöglichen. Dazu ist in dem Gurtaufroller eine in einem Rahmen drehbar gelagerte und in Aufwickelrichtung federvorgespannte Gurtwelle vorgesehen, auf der der Sicherheitsgurt aufwickelbar ist. Ferner weist der Gurtaufroller einen Blockiermechanismus auf, welcher bei einem Überschreiten einer vorbestimmten Auszugsbeschleunigung des Sicherheitsgurtes angesteuert wird, so dass die Gurtwelle im Anschluss in Gurtauszugsrichtung blockiert ist. Der Blockiermechanismus umfasst eine an der Gurtwelle gelagerte Blockierklinke, deren Bewegung durch eine drehbar an der Gurtwelle gelagerte Steuerscheibe gesteuert wird. Die Steuerscheibe selbst ist in Gurtauszugsrichtung der Gurtwelle federvorgespannt und dreht sich daher unterhalb der vorbestimmten Auszugsbeschleunigung des Sicherheitsgurtes mit der Gurtwelle mit. Auf der Steuerscheibe ist ferner eine Trägheitsmasse schwenkbar gelagert, welche bei einem Überschreiten der vorbestimmten Auszugsbeschleunigung des Sicherheitsgurtes zurückbleibt und dadurch in eine rahmenfeste Verzahnung des Gurtaufrollers einsteuert und die Steuerscheibe gegenüber der Gurtwelle anhält. Durch das Anhalten der Steuerscheibe wird wiederum der Blockiermechanismus angesteuert, indem die an der Gurtwelle gelagerte Blockierklinke eine durch eine Führung in einer Steuerkontur in der Steuerscheibe erzwungene Einsteuerbewegung in eine rahmenfeste Verzahnung ausführt.

Die Trägheitsmasse muss aufgrund ihrer oben beschriebenen Aufgabe eine gewisse Masse aufweisen, da sie ansonsten bei dem Überschreiten der Auszugsbeschleunigung nicht gegenüber der Gurtwelle zurückbleibt. Ferner muss die Trägheitsmasse auf der sich mit der Gurtwelle drehenden Steuerscheibe beweglich gelagert sein, und zwar derart, dass sie für die Ansteuerung der Blockiereinrichtung eine Relativbewegung gegenüber der Steuerscheibe ausführen können muss. Aufgrund der Masse der Trägheitsmasse und deren beweglichen Lagerung können auf den Gurtaufroller einwirkende Erschütterungen zu einer unerwünschten Geräuschentwicklung durch die Trägheitsmasse führen.

Aufgabe der Erfindung ist es daher, einen selbstsperrenden Gurtaufroller mit einer Blockiereinrichtung mit einer gurtbandsensitiven Ansteuerung durch eine auf einer Steuerscheibe beweglich gelagerte Trägheitsmasse zu schaffen, welcher eine verminderte Geräuschentwicklung bei Erschütterungen aufweist.

Zur Lösung der Aufgabe wird erfindungsgemäß ein selbstsperrender Gurtaufroller mit den Merkmalen von Anspruch 1 vorgeschlagen. Weitere bevorzugte Ausführungsformen der Erfindung sind den Unteransprüchen, den Figuren und der zugehörigen Beschreibung zu entnehmen.

Gemäß dem Grundgedanken der Erfindung wird vorgeschlagen, dass an der Trägheitsmasse und/oder an der Steuerscheibe ein die quer zu der Schwenkbewegung der Trägheitsmasse gerichtete Relativbewegung zwischen der Trägheitsmasse und der Steuerscheibe begrenzender Vorsprung vorgesehen ist. Durch die vorgeschlagene Lösung wird die quer gerichtete Bewegungsmöglichkeit der Trägheitsmasse, welche ursächlich für die Geräuschentwicklung ist, gezielt eingeschränkt, ohne dass durch die Anordnung des Vorsprunges die Bewegung der Trägheitsmasse zur Ansteuerung der Blockiereinrichtung nachteilig eingeschränkt wird.

Ferner wird vorgeschlagen, dass die Trägheitsmasse zur Ansteuerung der Blockiereinrichtung aus einer ersten Stellung in eine zweite Stellung ausschwenkt, und der Vorsprung derart angeordnet ist, dass er die Relativbewegung zwischen der Trägheitsmasse und der Steuerscheibe in der ersten Stellung der Trägheitsmasse begrenzt. Durch die vorgeschlagene Anordnung des Vorsprunges wird die Geräuschentwicklung besonders effizient reduziert, da sich die Trägheitsmasse während des angelegten Sicherheitsgurtes im Normalbetrieb zeitlich im Wesentlichen in der ersten Stellung befindet, so dass die Einschränkung der Bewegungsmöglichkeit der Trägheitsmasse in dieser Stellung besonders wirkungsvoll hinsichtlich der Geräuschreduzierung ist.

Weiter wird vorgeschlagen, dass an der Steuerscheibe und/oder der Trägheitsmasse ein zweiter Vorsprung vorgesehen ist, über den die Trägheitsmasse und die Steuerscheibe in einer die Blockiereinrichtung ansteuernden zweiten Stellung der Trägheitsmasse quer zu der Schwenkbewegung der Trägheitsmasse aneinander zur Anlage gelangen. Die Geräuschentwicklung kann durch den vorgesehenen zweiten Vorsprung zusätzlich auch in der die Blockiereinrichtung ansteuernden zweiten Stellung der Trägheitsmasse reduziert werden.

Weiter wird vorgeschlagen, dass der oder die Vorsprünge zwei die Relativbewegung der Trägheitsmasse beidseitig begrenzende Anlageflächen aufweisen. Durch die beidseitig die Relativbewegung der Trägheitsmasse begrenzenden Anlageflächen kann die Bewegungsfreiheit der Trägheitsmasse und die damit verbundene Geräuschentwicklung weiter reduziert werden.

Der oder die Vorsprünge können in diesem Fall besonders einfach jeweils durch einen an der Steuerscheibe angeordneten L-förmigen Finger gebildet sein. Durch die Formgebung des oder der Vorsprünge als L-förmige die Trägheitsmasse umgreifende Finger können diese konstruktiv besonders einfach als ein Formabschnitt der Steuerscheibe ausgebildet sein, welcher bereits beide die Bewegung der Trägheitsmasse begrenzenden Anlageflächen aufweist.

Ferner wird vorgeschlagen, dass der L-förmige Finger derart angeordnet ist, dass die Überdeckung des L-förmigen Fingers mit der Trägheitsmasse während der Schwenkbewegung der Trägheitsmasse in Abhängigkeit von der Richtung der Schwenkbewegung kontinuierlich zu- oder abnimmt. Die Trägheitsmasse wird praktisch in den Freiraum des L-förmigen Fingers hinein oder heraus bewegt, wobei die erfindungsgemäß bezweckte Einschränkung der Bewegungsfreiheit dabei ebenfalls kontinuierlich ab- oder zunimmt.

Weiterhin wird vorgeschlagen, dass der Vorsprung und/oder die Trägheitsmasse eine rampenförmige Anlagefläche aufweisen, über die die Trägheitsmasse und die Steuerscheibe aneinander zur Anlage gelangen. Durch die vorgesehene rampenförmige Anlagefläche werden der Abstand und damit die Bewegungsfreiheit der Trägheitsmasse quer zu der Schwenkbewegung kontinuierlich verringert. Die Trägheitsmasse läuft dadurch über die rampenförmige Anlagefläche auf der Steuerscheibe auf, ohne dass ihre Bewegung dabei durch ein Festhaken behindert werden kann. Ferner wird vorgeschlagen, dass die Trägheitsmasse an der Steuerscheibe um einen Drehpunkt schwenkbar gelagert ist, und an einem freien Ende eine Eingriffsspitze zum Eingriff in eine feststehende Verzahnung des Gurtaufrollers aufweist, und der Vorsprung derart angeordnet ist, dass er die Querbewegung der Trägheitsmasse an einem zweiten in Bezug zu dem Drehpunkt gegenüberliegenden Ende der Trägheitsmasse begrenzt. Die Bewegung der Trägheitsmasse wird dadurch bewusst nicht an dem Ende eingeschränkt, welches die Eingriffsspitze aufweist, sondern an dem in Bezug zu dem Drehpunkt gegenüberliegenden Ende, welches ohne Einschränkung der Eingriffsfunktion gezielt zur Anlage des Vorsprunges ausgebildet werden kann.

Eine weitere bevorzugte Ausführungsform der Erfindung kann darin gesehen werden, dass der Vorsprung derart angeordnet ist, dass er die Querbewegung der Trägheitsmasse zu der Steuerscheibe an einem radial äußeren Abschnitt der Trägheitsmasse begrenzt. Die vorgeschlagene Anordnung des Vorsprunges ermöglicht eine Begrenzung der Querbewegung mit einem möglichst großen Hebelarm, durch die eine sehr stabile Unterstützung der Trägheitsmasse verwirklicht werden kann.

Die Erfindung wird im Folgenden anhand eines bevorzugten Ausführungsbeispiels näher erläutert. Dabei zeigen:
- Fig. 1:: Steuerscheibe mit einer Trägheitsmasse in der die Blockiereinrichtung nicht ansteuernden ersten Stellung;
- Fig. 2:: Steuerscheibe mit einer Trägheitsmasse in der die Blockiereinrichtung ansteuernden zweiten Stellung;
- Fig. 3:: Steuerscheibe mit Trägheitsmasse in Schnittrichtung durch einen die Relativbewegung zwischen der Trägheitsmasse und der Steuerscheibe begrenzenden Vorsprung.

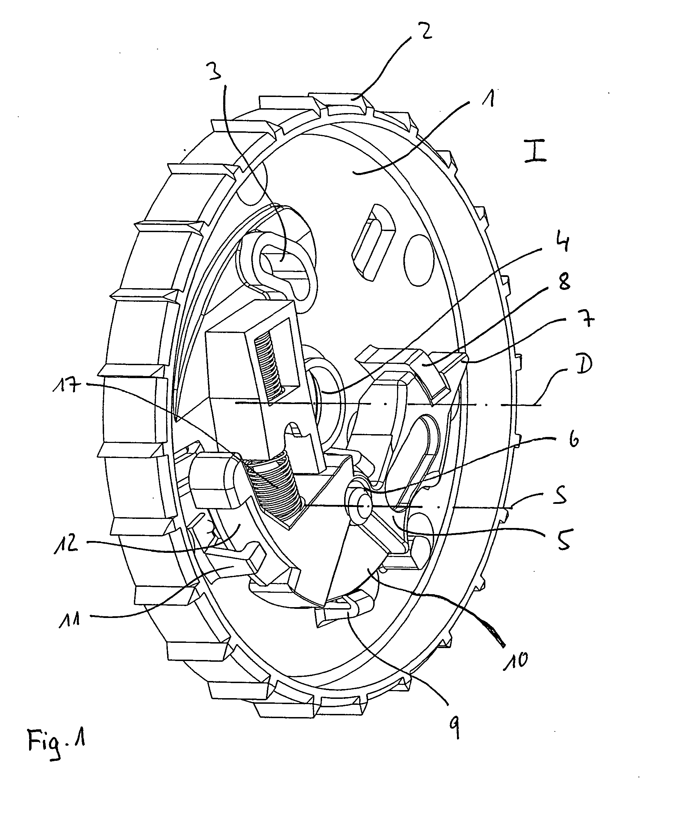

In der Figur 1 ist eine Steuerscheibe 1 zu erkennen, welche in einem Lager 4 drehbar um eine Drehachse D auf einer nicht dargestellten Gurtwelle eines Gurtaufrollers gelagert ist und gegenüber dieser in Auszugsrichtung eines auf der Gurtwelle aufgewickelten Sicherheitsgurtes federvorgespannt ist. An der Steuerscheibe 1 ist eine Steuerbohne 3 vorgesehen, in die ein Steuerpin einer an der Gurtwelle gelagerten Blockierklinke eingreift. Die Blockierklinke bildet eine Blockiereinrichtung, welche zur Blockierung der Gurtwelle in Auszugsrichtung des Sicherheitsgurtes in eine gurtaufrollerfeste Verzahnung einsteuert. Die Ansteuerung der Blockierklinke wird dabei durch ein Anhalten der Steuerscheibe 1 gegenüber der Gurtwelle bewirkt, wobei die Bewegung der Blockierklinke dabei durch den in die Steuerbohne 3 eingreifenden Steuerpin erzwungen wird. Die Gurtwelle, die Blockierklinke, der Rahmen und sonstige Teile des Gurtaufrollers sind im Sinne einer übersichtlicheren Darstellung der Erfindung bewusst nicht dargestellt worden. Da sie im Übrigen durch die Erfindung nicht verändert werden, können sie als Stand der Technik, wie z.B. aus den Druckschriften DE 103 24 195 B4 und DE 29 24 575 bekannt, hinzugedacht werden. Die Steuerscheibe 1 weist ferner eine äußere Verzahnung 2 auf, welche zum Eingriff eines ebenfalls nicht dargestellten fahrzeugsensitiv angesteuerten Blockierhebels vorgesehen ist.

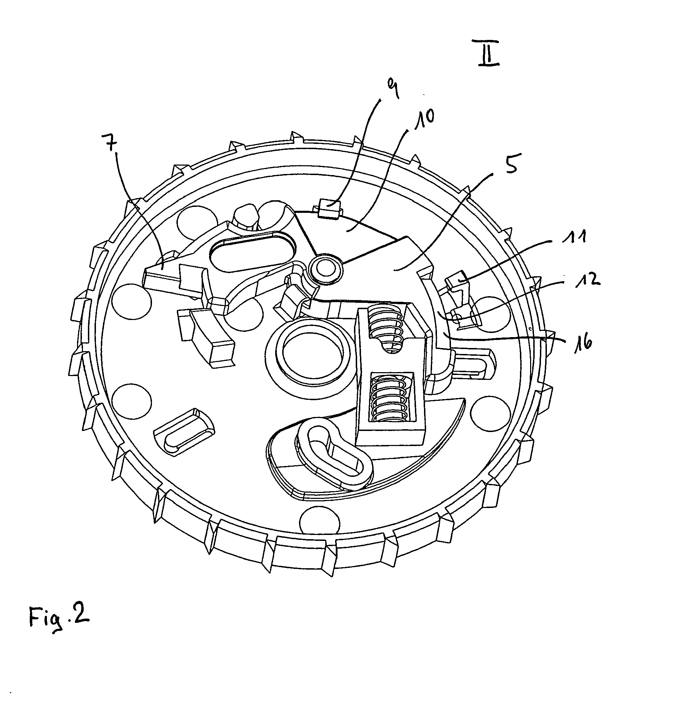

Auf der Steuerscheibe 1 ist ein Stift vorgesehen, welcher einen Drehpunkt 6 bildet, auf dem eine Trägheitsmasse 5 schwenkbar um eine Schwenkachse S gelagert ist. Die Trägheitsmasse 5 ist über einen Federmechanismus 17 in eine in der Figur 1 dargestellte erste Stellung I federvorgespannt, in der die Trägheitsmasse 5 an einem Anschlag 8 anliegt. Der Stift ist dabei derart ausgerichtet, dass die Schwenkachse S der Trägheitsmasse 5 parallel zu der Drehachse D der Steuerscheibe 1 und der nicht dargestellten Gurtwelle ausgerichtet ist. Bei einem Überschreiten einer vorbestimmten Auszugsbeschleunigung des Sicherheitsgurtes bleibt die Trägheitsmasse 5 gegenüber der Steuerscheibe 1 zurück und verschwenkt gegen die Federkraft des Federmechanismus 17 in die in der Figur 2 gezeigte zweite Stellung II und greift dabei mit einer Eingriffsspitze 7 in eine nicht dargestellte gurtaufrollerfeste Verzahnung ein und hält die Steuerscheibe 1 daraufhin gegenüber der Gurtwelle an, wodurch wiederum die Blockiereinrichtung angesteuert wird.

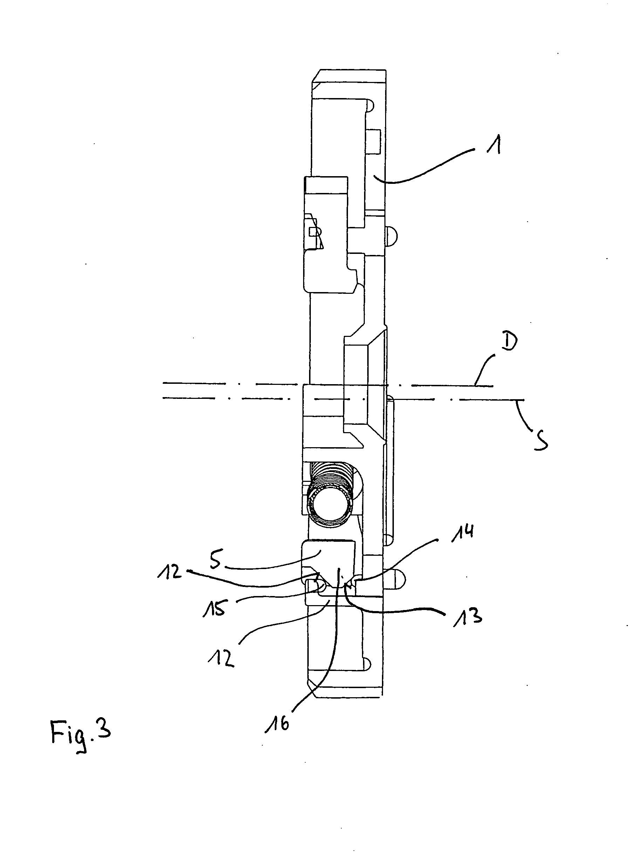

Zur Reduzierung der Geräuschentwicklung durch die Trägheitsmasse 5 ist ein Vorsprung 11 in Form eines L-förmigen Fingers vorgesehen, welcher in der ersten Stellung I die Trägheitsmasse 5 an einem in Bezug zu dem Drehpunkt 6 gegenüber der Eingriffsspitze 7 liegenden radial äußeren Abschnitt 16 umgreift, wie auch in der Schnittdarstellung in Figur 3 zu erkennen ist. Durch den Vorsprung 11 sind zwei beidseitig des Abschnitts 16 angeordnete Anlageflächen 14 und 15 geschaffen, an denen die Trägheitsmasse 5 mit zwei beidseitig angeordneten rampenförmigen Anlageflächen 12 und 13 zur Anlage gelangt. Durch die Anlage der Anlageflächen 12 und 13 der Trägheitsmasse 5 an den Anlageflächen 14 und 15 des Vorsprungs 11 wird die Relativbewegung zwischen der Trägheitsmasse 5 und der Steuerscheibe 1 parallel zu der Schwenkachse S bzw. quer zu der Schwenkbewegung der Trägheitsmasse 5 begrenzt, so dass die durch die Bewegung der Trägheitsmasse 5 relativ zu der Steuerscheibe 1 verursachte Geräuschentwicklung reduziert wird.

Beim Verschwenken der Trägheitsmasse 5 in die in der Figur 2 gezeigte zweite Stellung II wird der Abschnitt 16 der Trägheitsmasse 5 aus dem Zwischenraum des Vorsprunges 11 zwischen den Anlageflächen 14 und 15 heraus bewegt und gleichzeitig mit einem zweiten radial äußeren Abschnitt 10 in einen Zwischenraum eines ebenfalls durch den L-förmigen Finger gebildeten zweiten Vorsprung 9 eingeführt. Der Vorsprung 9 begrenzt in der zweiten Stellung II der Trägheitsmasse 5 die Relativbewegung der Trägheitsmasse 5 zu der Steuerscheibe 1 in gleicher Weise wie der Vorsprung 11 in der ersten Stellung I und reduziert dadurch die dadurch verursachte Geräuschentwicklung. Im Idealfall überlappen sich dabei die Bewegungen aus dem Vorsprung 11 heraus und in den Vorsprung 9 hinein, so dass die quer zu der Schwenkbewegung gerichtete Relativbewegung der Trägheitsmasse 5 zu der Steuerscheibe 1 zu jedem Zeitpunkt der Schwenkbewegung durch wenigstens einen der Vorsprünge 11 oder 9 begrenzt ist.

Die Anlageflächen 12 und 13 an dem Abschnitt 16 der Trägheitsmasse 5 sind rampenförmig ausgebildet, so dass der Abschnitt 16 praktisch keilförmig ausgebildet ist und es dadurch verhindert wird, dass die Trägheitsmasse 5 an dem Vorsprung 11 festhakt und nicht vollständig in die erste Stellung I einschwenkt.

## Patentansprüche

1. Selbstsperrender Gurtaufroller mit einer drehbar in einem Rahmen gelagerten Gurtwelle, auf der ein Sicherheitsgurt aufwickelbar ist, einer Blockiereinrichtung, welche die Gurtwelle bei einem Überschreiten einer vorbestimmten Auszugsbeschleunigung des Sicherheitsgurtes in Auszugsrichtung des Sicherheitsgurtes blockiert, einer drehbar auf der Gurtwelle gelagerten und in Auszugsrichtung des Sicherheitsgurtes federvorgespannten Steuerscheibe (1), auf der eine Trägheitsmasse (5) schwenkbar um eine zu der Drehachse (D) der Gurtwelle parallele Schwenkachse (S) gelagert ist, **dadurch gekennzeichnet, dass** an der Trägheitsmasse (5) und/oder an der Steuerscheibe (1) ein die quer zu der Schwenkbewegung der Trägheitsmasse (5) gerichtete Relativbewegung zwischen der Trägheitsmasse (5) und der Steuerscheibe (1) begrenzender Vorsprung (11) vorgesehen ist.

2. Selbstsperrender Gurtaufroller nach Anspruch 1, **dadurch gekennzeichnet, dass** die Trägheitsmasse (5) zur Ansteuerung der Blockiereinrichtung aus einer ersten Stellung (I) in eine zweite Stellung (II) ausschwenkt, und der Vorsprung (11) derart angeordnet ist, dass er die Relativbewegung zwischen der Trägheitsmasse (5) und der Steuerscheibe (1) in der ersten Stellung (I) der Trägheitsmasse (5) begrenzt.

3. Selbstsperrender Gurtaufroller nach einem der vorangegangenen Ansprüche, **dadurch gekennzeichnet, dass** an der Steuerscheibe (1) und/oder an der Trägheitsmasse (5) ein zweiter Vorsprung (9) vorgesehen ist, über den die Trägheitsmasse (5) und die Steuerscheibe (1) in einer die Blockiereinrichtung ansteuernden zweiten Stellung (II) der Trägheitsmasse (5) quer zu der Schwenkbewegung der Trägheitsmasse (5) aneinander zur Anlage gelangen.

4. Selbstsperrender Gurtaufroller nach einem der vorangegangenen Ansprüche, **dadurch gekennzeichnet, dass** der oder die Vorsprünge (9,11) zwei die Relativbewegung der Trägheitsmasse (5) beidseitig begrenzende Anlageflächen (14,15) aufweisen.

5. Selbstsperrender Gurtaufroller nach Anspruch 4, **dadurch gekennzeichnet, dass** der oder die Vorsprünge (9,11) jeweils durch einen an der Steuerscheibe (1) angeordneten L-förmigen Finger gebildet ist oder sind.

6. Selbstsperrender Gurtaufroller nach Anspruch 5, **dadurch gekennzeichnet, dass** der L-förmige Finger derart angeordnet ist, dass die Überdeckung des L-förmigen Fingers mit der Trägheitsmasse (5) während der Schwenkbewegung der Trägheitsmasse (5) in Abhängigkeit von der Richtung der Schwenkbewegung kontinuierlich zu- oder abnimmt.

7. Selbstsperrender Gurtaufroller nach einem der vorangegangenen Ansprüche, **dadurch gekennzeichnet, dass** der Vorsprung (9,11) und/oder die Trägheitsmasse (5) eine rampenförmige Anlagefläche (12,13) aufweisen, über die die Trägheitsmasse (5) und die Steuerscheibe (1) aneinander zur Anlage gelangen.

8. Selbstsperrender Gurtaufroller nach einem der vorangegangenen Ansprüche, **dadurch gekennzeichnet, dass** die Trägheitsmasse (5) an der Steuerscheibe (1) um einen Drehpunkt (6) schwenkbar gelagert ist, und an einem freien Ende eine Eingriffsspitze (7) zum Eingriff in eine feststehende Verzahnung des Gurtaufrollers aufweist, und der Vorsprung (11) derart angeordnet ist, dass er die Querbewegung der Trägheitsmasse (5) an einem zweiten in Bezug zu dem Drehpunkt (6) gegenüberliegenden Abschnitt (16) der Trägheitsmasse (5) begrenzt.

9. Selbstsperrender Gurtaufroller nach einem der vorangegangenen Ansprüche, **dadurch gekennzeichnet, dass** der oder die Vorsprünge (9,11) derart angeordnet sind, dass sie die Querbewegung der Trägheitsmasse (5) zu der Steuerscheibe (1) an einem radial äußeren Abschnitt (10,16) der Trägheitsmasse (5) begrenzen.

## Claims

1. A self-locking belt retractor including a belt shaft rotatable supported in a frame, on which belt shaft a seat belt is windable, a blocking device which blocks the belt shaft upon an exceeding of a predetermined extension acceleration of the seat belt in the extension direction, a control disk (1) rotatably supported on the belt shaft and spring-preloaded in the extension direction of the seat belt, on which control disk (1) an inertial mass (5) is pivotally supported about a pivot axis (S) parallel to the axis of rotation (D) of the belt shaft, **characterised in that** a projection (11) provided on the inertial mass (5) and/or on the control disk (1) limits the relative movement between the inertial mass (5) and the control disk (1), which relative movement is oriented transversely to the pivot movement of the inertial mass (5)

2. The self-locking belt retractor according to claim 1, **characterised in that** the inertial mass (5) pivots, for controlling the blocking device, out from a first position (I) into a second position (II), and the projection (11) is disposed such that it limits the relative movement between the inertial mass (5) and the control disk (1) in the first position (I) of the inertial mass (5).

3. The self-locking belt retractor according to one of the preceding claims, **characterised in that** a second projection (9) is provided on the control disk (1) and/or on the inertial mass (5), via which second projection (9) the inertial mass (5) and the control disk (1) reach abutment on each other in a second position (II) of the inertial mass (5) transverse to the pivot movement of the inertial mass (5), which second position controls the blocking device.

4. The self-locking belt retractor according to one of the preceding claims, **characterised in that** the projection or projections (9, 11) has or have two abutment surfaces (14, 15) limiting the relative movement of the inertial mass (5) on both sides.

5. The self-locking belt retractor according to claim 4, **characterised in that** the projection or projections (9, 11) is or are reach formed by an L-shaped finger disposed on the control disk (1).

6. The self-locking belt retractor according to claim 5, **characterised in that** the L-shaped finger is disposed such that the overlap of the L-shaped finger with the inertial mass (5) continuously increases or decreases during the pivot movement of the inertial mass (5) depending on the direction of the pivot movement.

7. The self-locking belt retractor according to one of the preceding claims, **characterised in that** the projection (9, 11) and/or the inertial mass (5) has a ramp-shaped abutment surface (12, 13), via which the inertial mass (5) and the control disk (1) reach abutment on each other.

8. The self-locking belt retractor according to one of the preceding claims, **characterised in that** the inertial mass (5) is pivotably supported on the control disk (1) about a pivot point (6), and has on a free end an engagement tip (7) for engaging into a fixed gearing of the belt retractor, and the projection (11) is disposed such that it limits the transverse movement of the inertial mass (5) on a second section (16) of the inertial mass (5), which second section (16) lies opposite with respect to the pivot point (6).

9. The self-locking belt retractor according to one of the preceding claims, **characterised in that** the projection or projections (9, 11) is or are disposed such that they limit the transverse movement of the inertial mass (5) towards the control disk (1) on a radially outer section (10, 16) of the inertial mass (5)

## Revendications

1. Enrouleur de ceinture à blocage automatique comportant un arbre de ceinture monté rotatif dans un cadre et sur lequel une ceinture de sécurité peut être enroulée, un dispositif de blocage qui bloque l'arbre de ceinture en cas de dépassement d'une accélération prédéterminée du dévidage de la ceinture de sécurité dans le sens de dévidage de la ceinture de sécurité, un disque de commande (1) monté rotatif sur l'arbre de ceinture et sollicité par ressort dans le sens de dévidage de la ceinture de sécurité et sur lequel une masse inertielle (5) est montée pivotante autour d'un axe de pivotement (S) parallèle à l'axe de rotation (D) de l'arbre de ceinture, **caractérisé en ce qu'**il est prévu, sur la masse inertielle (5) et/ou sur le disque de commande (1), une saillie (11) qui limite le mouvement relatif, transversal au mouvement de pivotement de la masse inertielle (5), qui existe entre la masse inertielle (5) et le disque de commande (1).

2. Enrouleur de ceinture à blocage automatique selon la revendication 1, **caractérisé en ce que** la masse inertielle (5) pivote pour passer d'une première position (I) à une deuxième position (II) pour amorcer le dispositif de blocage, et la saillie (11) est agencée de manière à limiter le mouvement relatif entre la masse inertielle (5) et le disque de commande (1) dans la première position (I) de la masse inertielle (5).

3. Enrouleur de ceinture à blocage automatique selon l'une des revendications précédentes, **caractérisé en ce qu'**il est prévu une deuxième saillie (9) sur le disque de commande (1) et/ou sur la masse inertielle (5) par le biais de laquelle la masse inertielle (5) et le disque de commande (1) viennent mutuellement en appui, transversalement au mouvement de pivotement de la masse inertielle (5), dans une deuxième position (II) de la masse inertielle (5) amorçant le dispositif de blocage.

4. Enrouleur de ceinture à blocage automatique selon l'une des revendications précédentes, **caractérisé en ce que** la ou les saillies (9, 11) présentent deux surfaces d'appui (14, 15) limitant de chaque côté le mouvement relatif de la masse inertielle (5).

5. Enrouleur de ceinture à blocage automatique selon la revendication 4, **caractérisé en ce que** la ou les saillies (9, 11) sont chacune formées par un ergot en forme de L situé sur le disque de commande (1).

6. Enrouleur de ceinture à blocage automatique selon la revendication 5, **caractérisé en ce que** l'ergot en forme de L est agencé de manière que le recouvrement de la masse inertielle (5) par l'ergot en forme de L au cours du mouvement de pivotement de la masse inertielle (5) augmente ou diminue continuellement en fonction du sens du mouvement de pivotement.

7. Enrouleur de ceinture à blocage automatique selon l'une des revendications précédentes, **caractérisé en ce que** la saillie (9, 11) et/ou la masse inertielle (5) présentent une surface d'appui (12, 13) en forme de rampe par l'intermédiaire de laquelle la masse inertielle (5) et le disque de commande (1) viennent mutuellement en appui.

8. Enrouleur de ceinture à blocage automatique selon l'une des revendications précédentes, **caractérisé en ce que** la masse inertielle (5) est montée sur le disque de commande (1) en étant pivotante autour d'un centre de rotation (6) et présente, sur une extrémité libre, une pointe d'engrènement (7) destinée à s'engrener dans une denture fixe de l'enrouleur de ceinture, et la saillie (11) est agencée de manière à limiter le mouvement transversal de la masse inertielle (5) au niveau d'une deuxième section (16) de la masse inertielle (5) qui lui fait face relativement au centre de rotation (6).

9. Enrouleur de ceinture à blocage automatique selon l'une des revendications précédentes, **caractérisé en ce que** la ou les saillies (9, 11) sont agencées de manière à limiter le mouvement transversal de la masse inertielle (5), par rapport au disque de commande (1), au niveau d'une section radialement extérieure (10, 16) de la masse inertielle (5).
